# EUROPÄISCHE PATENTSCHRIFT

(11) **EP 3 707 787 B1**
(45) Veröffentlichungstag und Bekanntmachung des Hinweises auf die Patenterteilung: **09.08.2023**
(21) Anmeldenummer: 18807206.0
(22) Anmeldetag: 07.11.2018
(51) Int. Cl.: H01S 3/23, H01S 3/06, H01S 3/10, H01S 3/00, H01S 3/0941

(54) **VERFAHREN ZUR LASERVERSTÄRKUNG**
LASER AMPLIFICATION METHOD
PROCÉDÉ D'AMPLIFICATION DE LASER

(30) Priorität: 10.11.2017 DE 102017126453
(43) Veröffentlichungstag der Anmeldung: 16.09.2020
(73) Patentinhaber: AMPHOS GmbH, 52134 Herzogenrath (DE)
(72) Erfinder: SCHNITZLER, Claus, 52134 Herzogenrath (DE); DOLKEMEYER, Jan, 52134 Herzogenrath (DE); MANS, Torsten, 52134 Herzogenrath (DE)
(74) Vertreter: Trumpf Patentabteilung
(86) Internationale Anmeldenummer: PCT/DE2018/100903
(87) Internationale Veröffentlichungsnummer: WO 2019/091514

(56) Entgegenhaltungen:
- EP-A1- 2 965 852
- US-A- 4 698 816
- ARMSTRONG D J ET AL: "USING A NEWPORT REFRACTIVE BEAM SHAPER TO GENERATE HIGH-QUALITY FLAT-TOP SPATIAL PROFILES FROM A FLASHLAMP-PUMPED COMMERCIAL ND:YAG LASER", VISUAL COMMUNICATIONS AND IMAGE PROCESSING; 20-1-2004 - 20-1-2004; SAN JOSE,, Bd. 5525, 1. Januar 2004 (2004-01-01), Seiten 88-97, XP001223555, DOI: 10.1117/12.557848 ISBN: 978-1-62841-730-2
- LASKIN ALEXANDER ET AL: "Refractive beam shapers for optical systems of lasers", VISUAL COMMUNICATIONS AND IMAGE PROCESSING; 20-1-2004 - 20-1-2004; SAN JOSE,, Bd. 9346, 20. Februar 2015 (2015-02-20), Seiten 93460R-93460R, XP060049693, DOI: 10.1117/12.2080864 ISBN: 978-1-62841-730-2
- ALEXANDER LASKIN ET AL: "[pi]Shaper - Refractive Beam Shaping Optics for Advanced Laser Technologies", JOURNAL OF PHYSICS: CONFERENCE SERIES, Bd. 276, 1. Februar 2011 (2011-02-01), Seite 012171, XP055549034, DOI: 10.1088/1742-6596/276/1/012171

## Beschreibung

Die vorliegende Erfindung betrifft ein Verfahren, gemäß Anspruch 1, zur Verstärkung einer

Seedlaserstrahlung, welche entlang einer Einstrahlrichtung in ein laseraktives Verstärkermedium eingestrahlt wird. Ein weiterer Gegenstand der Erfindung ist ein Verstärker, gemäß Anspruch 15, zur Verstärkung einer Seedlaserstrahlung, welche entlang einer Einstrahlrichtung in ein laseraktives Verstärkermedium eingestrahlt wird.

Mit heutigen Lasern lässt sich Laserstrahlung in einem weiten Leistungsbereich erzeugen. Jedoch sind insbesondere Laser, welche Laserstrahlung mit höherer Strahlqualität erzeugen, in ihrer maximal erzielbaren Leistung durch Effekte, wie thermische Linsenwirkung, begrenzt. Anwendungen wie beispielsweise das Laser-Annealing, bei welchem Bauelemente großflächig mittels einer definierten Laserstrahlung erhitzt werden, erfordern aber gerade solche Laser hoher Leistung.

Um dennoch Laserstrahlung hoher Strahlqualität und hoher Leistung zu erzeugen, werden dem Laser nachgeschaltete optische Verstärker verwendet. Sie umfassen mindestens ein laseraktives Verstärkermedium, welches mittels zuvor zugeführter Energie die Laserstrahlung verstärken kann. Diese Energie kann dem laseraktiven Verstärkermedium auf verschiedenen Wegen durch ein sogenanntes Pumpen zugeführt werden, wie beispielsweise mittels Mikrowellenstrahlung oder eines Pumplasers. Die maximale bei diesem Pumpen des laseraktiven Verstärkermediums aufbringbare Leistung wird durch auftretende thermische Effekte beschränkt, welche die Strahlqualität negativ beeinflussen und bis hin zu einer Zerstörung des Verstärkermediums bei einem Überschreiten der Zerstörungsschwelle führen können.

Zur Verstärkung wird die von dem Laser erzeugte und relativ leistungsarme Laserstrahlung als Seedlaserstrahlung entlang einer Einstrahlrichtung in das laseraktive Verstärkermedium eingestrahlt. Bei der Propagation durch das laseraktive Verstärkermedium wird ein Teil der in das laseraktive Verstärkermedium gepumpten Energie zur Verstärkung der Seedlaserstrahlung verwendet. Die Laserstrahlung verlässt das Verstärkermedium mit einer gegenüber der Seedlaserstrahlung verstärkten höheren Leistung.

Um mehr der gepumpten Energie zur Verstärkung der Seedlaserstrahlung zu verwenden und eine verbesserte Verstärkung zu erzielen, wird bislang das laseraktive Verstärkermedium mehrfach von der Seedlaserstrahlung durchlaufen, wie beispielsweise in der DE 100 25 874 B4 und der EP 1 181 754 B1 beschrieben. Hierzu wird Seedlaserstrahlung unter einem Winkel in das Verstärkermedium eingestrahlt. Die eingestrahlte Seedlaserstrahlung ist mit einer typischen Breite im Bereich von 200 µm erheblich kleiner als das typischerweise eine Breite von 10 mm und mehr aufweisende Verstärkermedium. Nach dem ersten Durchqueren des Verstärkermediums wird die verstärkte Seedlaserstrahlung durch ein Reflektorelement zurück in das Verstärkermedium reflektiert. Die aus dem Verstärkermedium austretende und die reflektierte Seedlaserstrahlung weisen einen Winkelversatz zueinander auf, so dass die reflektierte Seedlaserstrahlung einen anderen Bereich des Verstärkermediums durchläuft. Nach dem erneuten Durchqueren des Verstärkermediums wird die Strahlung durch ein weiteres Reflektorelement wiederum in das Verstärkermedium reflektiert. Dies setzt sich solange fort, bis die verstärkte Seedlaserstrahlung den Verstärker an einer vorgesehenen Stelle verlassen kann. Die verstärkte Seedlaserstrahlung weist dann eine typische Bereite von 2 mm bis 3 mm auf.

Diese Verstärkungsverfahren haben sich jedoch als insoweit nachteilig erwiesen, da sie einen komplexen Aufbau erfordern und durch die Verwendung von Reflektorelementen und die erforderlichen, vergleichsweise großen Abmessungen des laseraktiven Verstärkermediums zudem konstruktiv aufwendig, teuer und fehleranfällig sind.

Es wird ferner auf die folgenden Dokumente verwiesen, die Verfahren zur Verstärkung einer Seedlaserstrahlung offenbaren, welche entlang einer Einstrahlrichtung in ein laseraktives Verstärkermedium eingestrahlt wird, wobei die Seedlaserstrahlung ein transversales Seedlaser-Intensitätsprofil aufweist, welches durch ein einstrahlseitiges Transformatorelement in ein plateauförmiges Eingangs-Intensitätsprofil transformiert wird:
- US 4 698 816 A (CHUN MYUNG K [US]) 6. Oktober 1987;
- ARMSTRONG: "Using a Newport refractive beam shaper to generate high-quality flat-top spatial profiles from a flashlamp-pumped commercial Nd:Yag Laser",VISUAL COMMUNICATIONS AND IMAGE PROCESSING; Bd. 5525, 1. Januar 2004, Seiten 88-97;
- LASKIN: "Refractive beam shapers for optical systems of lasers", VISUAL COMMUNICATIONS AND IMAGE PROCESSING; Bd. 9346, 20. Februar 2015, Seiten 93460R-1 bis 93460R-10;
- EP 2 965 852 A1 (UAB) 13. Januar 2016;

Im folgenden Dokument sind Transformatorelemente offenbart:
- LASKIN: "πShaper - Refractive Beam Shaping Optics for Advanced Laser Technologies", Journal of Physics: CONFERENCE SERIES, Bd. 276, 1. Februar 2011, Seite 012171.

Die A**ufgabe** der vorliegenden Erfindung ist es daher, ein Verfahren und einen Verstärker zur einfacheren und effizienten Verstärkung der Seedlaserstrahlung schon bei einem einfachen Durchlauf durch das Verstärkermedium anzugeben.

**Gelöst** wird diese Aufgabe durch ein Verfahren gemäß Anspruch 1 und einen Verstärker gemäß Anspruch 15. Bevorzugte Ausführungsformen der Erfindung sind in den abhängigen Ansprüchen offenbart.

Durch das einstrahlseitig vor dem Verstärkermedium angeordnete Transformatorelement kann die Seedlaserstrahlung an die Abmessungen des laseraktiven Verstärkermediums angepasst werden. Dabei ergeben sich aus dem transversalen Seedlaser-Intensitätsprofil die Abmessungen der Seedlaserstrahlung quer zur longitudinalen Einstrahlrichtung. Lediglich der Teil der Energie verstärkt dabei die Seedlaserstrahlung, welcher in von der Seedlaserstrahlung durchquerten Bereichen des laseraktiven Verstärkermediums gespeichert ist. Somit tragen nur die Bereiche des Verstärkermediums zur Verstärkung bei, welche sich in Einstrahlrichtung innerhalb des transversalen Intensitätsprofils der Seedlaserstrahlung befinden. Diese Bereich werden auch als Überlapp zwischen der Seedlaserstrahlung und dem Verstärkermedium bezeichnet. Durch die Transformation kann der Überlapp zwischen der Seedlaserstrahlung und dem Verstärkermedium vergrößert werden. Ein derart angepasstes plateauförmiges Eingangs-Intensitätsprofil der transformierten Seedlaserstrahlung kann den gesamten Bereichen des laseraktiven Verstärkermediums in einem ersten Durchgang durchqueren. Plateauförmig bedeutet dabei, dass das Intensitätsprofil mindestens entlang einer Richtung einen Intensitätsbereich mit im Wesentlichen gleichbleibender Intensität aufweist. Im Wesentlichen kann die im gesamten laseraktiven Verstärkermedium gespeicherte Energie zur Verstärkung des Seedlaserstrahlung verwendet werden. Diese Verstärkung kann bereits beim ersten Durchgang durch das Verstärkermedium erfolgen. Die Menge an Verstärkermedium bei gleicher Verstärkung kann kostensparend reduziert werden. Durch die Transformation kann die Extraktionseffizienz, das Verhältnis der durch die Verstärkung hinzugewonnenen Leistung des Lasers und der zum Pumpen des laseraktiven Verstärkermediums aufgebrachter Leistung, gesteigert werden. Extraktionseffizienzen im Bereich von 30 % bis 60 %, vorzugsweise von 35 % bis 50 %, und insbesondere von 40 % können erzielt werden. Durch das Pumpen verursachte thermische Effekte können bei gleicher Verstärkung und/oder gleicher Ausgangsleistung der Laserstrahlung aus dem Verstärkermedium verringert werden. Die Verstärkung kann energieeffizienter umgesetzt werden. Auf Reflektorelemente zur Zurücklenkung der Seedlaserstrahlung in das Verstärkermedium und einen komplexen und fehleranfälligen Aufbau kann verzichtet werden.

Eine Weiterbildung des Verfahrens sieht vor, dass das Eingangs-Intensitätsprofil an ein sich quer zur Einstrahlrichtung erstreckendes Verstärkungsfunktionsprofil des Verstärkermediums angepasst wird. Das Verstärkungsfunktionsprofil gibt an, im welchem Maße die Seedlaserstrahlung abhängig von ihrem Auftreffpunkt auf das Verstärkermedium verstärkt wird. Durch eine Anpassung des Eingangs-Intensitätsprofils an das Verstärkungsfunktionsprofil kann die im Wesentlichen nach Art einer Überlagerung aus Eingangs-Intensitätsprofils und Verstärkungsfunktionsprofil erfolgende Verstärkung weiter verbessert werden. Unterschiedliche Intensitäten des Eingangs-Intensitätsprofils können im gleichen Verhältnis verstärkt werden. Die Form des Eingangs-Intensitätsprofils kann auch nach der Verstärkung beibehalten werden. Die Anpassung des Eingangs-Intensitätsprofils kann in einer oder mehreren Richtungen erfolgen, insbesondere in beiden transversalen Richtungen quer zur Einstrahlrichtung. Beugungseffekte, welche wellenlängenabhängig im Randbereich des Verstärkermediums auftreten, in welchen das Verstärkungsfunktionsprofil gering oder null ist, können vermieden werden. Die transformierte Seedlaserstrahlung kann in den Randbereichen gering oder im Wesentlichen null sein. Aufgrund der Anpassung können zum kostengünstigen Pumpen des laseraktiven Verstärkermediums Diodenlaserstacks, insbesondere Diodenlaserbarren, verwendet werden. Die Strahlqualität der von Diodenlaserstacks emittierten Laserstrahlung kann sich hinsichtlich ihrer transversalen Schnellen- und der Langsamen-Achse deutlich unterscheiden, beispielsweise kann die Beugungsmaßzahl bei M²<10 bis hin zu M²<2 für die Schnelle-Achse und bei M²≥1000 für die Langsame-Achse liegen. Aus der unterschiedlichen Strahlqualität können unterschiedliche Verstärkungsfunktionsprofile quer zur Einstrahlrichtung folgen. Durch die Anpassung kann die transformierte Seedlaserstrahlung an diese unterschiedliche Strahlqualität angepasst werden.

Es ist vorteilhaft, wenn das Seedlaser-Intensitätsprofil glockenkurvenförmig, insbesondere gaußförmig, ist. Das kann hierdurch für unterschiedliche Laserquellen als Seedlaser, insbesondere auch punktförmige Laserquellen, verwendet werden. Eine zusätzliche Formung und/oder Transformation des Laserstrahls der Laserquelle kann entfallen.

Besonders bevorzugt weist die transformierte Seedlaserstrahlung eine Schwingungsmode auf, welche nicht der Grundmode der Seedlaserstrahlung entspricht. Mittels einer nicht der Grundmode entsprechenden Schwingungsmode kann die Form des Eingangs-Intensitätsprofils der transformierten Seedlaserstrahlung auf einfache Art angepasst werden. Bevorzugt weist die transformierte Seedlaserstrahlung eine, insbesondere mehrere, nicht der Grundmode der Seedlaserstrahlung entsprechende transversale Schwingungsmode auf. Die Anzahl der Maxima der Schwingungsmode kann entlang beider transversalen Richtungen, bevorzugt entlang einer transversalen Richtung, von der Anzahl der Maxima der Grundmode abweichen.

Eine weitere Ausgestaltung sieht vor, dass die Maximum-Intensität des Eingangs-Intensitätsprofils kleiner ist als die Maximum-Intensität des Seedlaser-Intensitätsprofils. Durch die kleinere Maximum-Intensität des Eingangs-Intensitätsprofils kann die Leistungsdichte der in das Verstärkermedium eingestrahlten Strahlung reduziert werden. Die Leistungsdichte kann bei gleicher Gesamtleistung durch eine Verbreiterung des Intensitätsprofils reduziert werden. Aufgrund der geringeren Leistungsdichte können thermische Effekte vermieden und das Verstärkermedium unterhalb der Zerstörungsschwelle betrieben werden. Die Maximum-Intensität des Eingangs-Intensitätsprofils kann um einen Faktor 2 bis 5 kleiner als die Maximum-Intensität des Seedlaser-Intensitätsprofils sein.

Eine nicht beanspruchte Möglichkeit ist, wenn das Eingangs-Intensitätsprofil im Wesentlichen rechteckförmig ausgebildet ist, insbesondere als Super-Gauß-Profil oder Top-Hat-Profil. Ein rechteckförmiges Eingangs-Intensitätsprofil kann auf einfache Weise an das laseraktive Verstärkermedium angepasst werden. Ein Super-Gauß-Profil, d.h. ein Gauß-Profil höherer Ordnung, oder ein Top-Hat-Profil können Bereiche mit im Wesentlichen konstanten und der Maximum-Intensität des Eingangs-Intensitätsprofils entsprechenden Intensität bereitstellen. Das Verstärkermedium kann durch diese Bereiche des Eingangs-Intensitätsprofils gleichmäßig beansprucht werden.

Eine ebenfalls nicht beanspruchte Möglichkeit ist, wenn das Eingangs-Intensitätsprofil einen kontinuierlichen Flankenverlauf aufweist, insbesondere nach Art von Flanken einer Gaußkurve. Ein kontinuierlicher Flankenverlauf kann die Auswirkungen von in den Randbereichen auftretenden Beugungseffekten verringern, da hiervon lediglich Bereiche geringer Intensität des Eingangs-Intensitätsprofils betroffen werden. Eingangs-Intensitätsprofile mit einem kontinuierlichen Flankenverlauf können nach der Verstärkung für weitere Anwendungen in ein gaußartiges Intensitätsprofil hoher Güte transformiert werden.

Laut der Erfindung ist es vorgesehen, dass das Eingangs-Intensitätsprofil die Form des Seedlaser-Intensitätsprofils entlang der transversalen Richtung der Schnellen-Achse beibehält. Die Transformation des Seedlaser-Intensitätsprofils kann entlang dieser transversalen Richtung auf einfache Weise durch Anpassung der Intensität erfolgen. Entlang der Schnellen-Achse, entlang welcher die Strahlqualität des Seedlaserstrahlung am höchsten ist, wird die Form des Seedaser-Intensitätsprofils vorteilhafter Weise beibehalten. Die transformierte Seedlaserstrahlung kann diese Strahlqualität beibehalten.

Vorzugsweise ist das Verstärkermedium zur Verstärkung der Seedlaserstrahlung quaderförmig. Ein quaderförmiges Verstärkermedium kann auf konstruktive einfache Weise platzsparend verbaut werden. Als laseraktives Verstärkermedium können Yb:YAG, Nd:YAG, Nd:YVO, Yb:LuO oder weitere laseraktive Materialien, wie dotierte Kristalle und Gläser, genutzt werden. Das Verstärkermedium kann eine longitudinale Länge von 5 mm bis 15 mm, eine transversale Breite von 5 mm bis 60 mm und eine transversale Dicke von 0,5 mm bis 1,5 mm aufweisen. Vorzugsweise umfasst das Verstärkermedium einen Pumpkanal. In das laseraktive Verstärkermedium, welches sich in diesem Pumpkanal befindet, kann Energie zur Verstärkung der Seedlaserstrahlung gepumpt werden.

In einer Weiterbildung des Verfahrens wird die Seedlaserstrahlung im Wesentlichen parallel zu einer Flächennormalen einer Seitenfläche des Verstärkermediums, insbesondere parallel zu einer optischen Achse des Verstärkers, in das Verstärkermedium eingestrahlt. Durch das im Wesentlichen parallel zu einer Flächennormale erfolgende Einstrahlen werden Asymmetrien vermieden, wie sie bei einem queren Einstrahlen unter einem Winkel auftreten. Der Strahlengang durch das laseroptische Verstärkermedium kann einfacher gestaltet werden. Ein Zurückreflektieren kann unterbleiben. Ein im Vergleich zu einer Zick-Zack-Bewegung kurzer Strahlengang kann erreicht werden. Ein Verstärkermedium mit kurzem Strahlengang kann weniger anfällig für äußere Einflüsse, thermische Effekte, Spannungsbrüche und thermische Linsen sein. Einer Degradation der Strahlparameter und Zerstörungen des laseraktiven Verstärkermediums kann vermieden werden.

Es wird weiter vorgeschlagen, dass das Verstärkermedium, insbesondere entlang desselben Strahlengangs durch das Verstärkermedium, mehrfach von der transformierten Seedlaserstrahlung durchlaufen wird. Die transformierte Seedlaserstrahlung kann durch ein Reflektorelement entlang desselben Strahlengangs in das Verstärkermedium zurückreflektiert werden. Es kann sich ein auf einfache Weise gefalteter Strahlengang ergeben, entlang dessen die transformierte Seedlaserstrahlung das Verstärkermedium durchquert, insbesondere bis zu vier Mal. Bei jedem Durchgang durch das Verstärkermedium kann die transformierte Seedlaserstrahlung weiter verstärkt werden. Alternativ kann die transformierte Seedlaserstrahlung durch ein Reflektorelement entlang eines zweiten Strahlengangs, welcher zu dem ersten Strahlengang parallel oder winkelversetzt sein kann, in das Verstärkermedium zurückreflektiert werden.

Bevorzugt werden im Transformatorelement optische Elemente, insbesondere Linsen, Asphären, azylindrische Linsen, diffraktive Elemente, Spiegel, totalreflektierende Mischelemente und/oder Blenden, verwendet. Optische Elemente ermöglichen eine einfache Transformation der Seedlaserstrahlung. Eine Blende kann das insbesondere gaußförmige Seedlaser-Intensitätsprofil auf einfach Art und Weise beschneiden und dieses in ein Eingangs-Intensitätsprofil transformieren. Der durch die Blende verursachte Leistungsverlust kann durch die verbesserte Verstärkung aufgrund der Anpassung an das Verstärkermedium ausgeglichen werden. Linsen, Asphären, azylindrische Linsen, diffraktive Elemente und/oder Spiegel können das Seedlaser-Intensitätsprofil im Wesentlichen verlustfrei in ein Eingangs-Intensitätsprofil transformieren. Die Phaseninformation der Seedlaserstrahlung kann durch diese Transformatorelemente für eine weitere Transformation erhalten werden. Totalreflektierende Mischelemente, wie Wellenleiter oder Glasplatten, können die Seedlaserstrahlung in ein homogenisiertes Eingangs-Intensitätsprofil transformieren. Das homogenisierte Eingangs-Intensitätsprofil kann dann verstärkt werden. Es kann eine für Laser-Annealing optimierte Laserstrahlung bereitgestellt werden, bei welcher das Erhalten der Phaseninformationen irrelevant ist. Eine spätere Homogenisierung der verstärkten Seedlaserstrahlung oder eines in UV-Strahlung konvertierten Anteils, welche mit einem erheblichen Kostenaufwand verbunden ist, kann im Wesentlichen entfallen.

In vorteilhafter Weise werden dem Verstärkermedium im Strahlengang nachgeschaltete optische Elemente an das Eingangs-Intensitätsprofil angepasst. Eine Vereinfachung der Abbildung zwischen den optische Elementen sowie dem Verstärkermedium kann erreicht werden. Die dem Verstärkermedium im Strahlengang nachgeschalteten optischen Elemente können beispielsweise optische Isolatoren gegen das Eintreten von Rückstreuungen in das Verstärkermedium, nichtlineare Kristalle zur Frequenzkonversion, Verzögerungsplatten oder Pockelszellen zur Polarisationsdrehung und/oder zum optischen Schalten sein. Bevorzugt können die nachgeschalteten optischen Elemente die gleiche, insbesondere plattenförmige, Geometrie wie das Verstärkermedium aufweisen.

Es wird vorgeschlagen, dass durch ein Rücktransformatorelement, insbesondere nach Art eines Transformatorelements, das Ausgangs-Intensitätsprofil der verstärkten Seedlaserstrahlung zurück transformiert wird, insbesondere in ein dem Seedlaser-Intensitätsprofil gleichendes Intensitätsprofil. Durch die Rücktransformation kann das Intensitätsprofil der verstärkten Seedlaserstrahlung anwendungsabhängig angepasst werden. Durch eine rücktransformierte Seedlaserstrahlung kann die Form des Seedlaser-Intensitätsprofils nach der Verstärkung beibehalten werden. Ein verstärktes Seedlaser-Intensitätsprofil kann erzielt werden, ohne dass Bereiche, insbesondere niedrigerer Intensität, unverhältnismäßig verstärkt werden. Bleibt die Phaseninformation der Seedlaserstrahlung bei der Transformation und der Verstärkung erhalten, kann die Strahlqualität der Seedlaserstrahlung nach der Rücktransformation wieder hergestellt werden. Ein weiteres Mischen des verstärkten Seedlaser-Intensitätsprofils mit anderen Intensitätsprofilen kann anwendungsabhängig vorgenommen werden.

Weiter vorteilhaft ist es, wenn das Verstärkermedium von einem Pumplaserstrahl gepumpt wird, dessen Intensitätsprofil dem Eingangs-Intensitätsprofil entspricht. Durch den Pumplaserstrahl kann das Verstärkermedium derart gepumpt werden, dass sich ein Verstärkungsprofil ergeben kann, welches dem Eingangs-Intensitätsprofil entspricht. Bevorzugt werden Diodenlaserbarren mit mehreren, linienförmig nebeneinander angeordneten Laserdioden verwendet. Deren Anordnung kann so gewählt werden, dass sich ein dem Eingangs-Intensitätsprofil entsprechender Pumplaserstrahl ergibt.

In einer Weiterbildung der Erfindung wird vorgesehen, dass mehrere Verstärkermedien entlang des Strahlengangs nach Art kaskadierter Verstärkerstufen hintereinander geschaltet werden. Die Verstärkung der Seedlaserstrahlung durch den Verstärker kann durch die kaskadierten Verstärkerstufen erhöht werden. Zur Anpassung an die Divergenz der Laserstrahlung können sich die einzelnen Verstärkermedien in ihren Abmessungen, insbesondere in ihren transversalen Dicken, unterscheiden. Eine weitere Transformation, beispielsweise eine Rücktransformation, der verstärkten Seedlaserstrahlung kann im Anschluss an die kaskadierten Verstärkerstufen erfolgen.

Bevorzugt wird eine transversale Breite des Verstärkermediums leistungsabhängig gewählt. Das Verstärkermedium kann auf einfache Weise an die Leistung der in das Verstärkermedium eingestrahlten Laserstrahlung angepasst werden, insbesondere an die Leistung der Seedlaserstrahlung. Bevorzugt wird bei einer größeren Leistung der Seedlaserstrahlung ein transversal breiteres Verstärkermedium gewählt. Auf diese Weise kann die Leistungsdichte der an das Verstärkermedium angepassten transformierten Seedlaserstrahlung im Wesentlichen gleich gehalten werden. Thermischen Effekten und Beschädigungen des Verstärkermediums durch eine zu große Leistungsdichte kann auf einfache Weise entgegengewirkt werden. Bei kaskadierten Verstärkerstufen kann die transversale Breite des Verstärkermediums entsprechend der Ausgangsleistung der vorherigen Verstärkerstufe gewählt werden. Insbesondere kann die transversale Breite des Verstärkermediums für Laserstrahlung mit einer Leistung im Bereich von 5W bis 10 W im Bereich von 0,5 mm bis 1,5 mm, bei einer Leistung im Bereich von 25 W bis 50 W im Bereich von 4 mm bis 6 mm, bei einer Leistung im Bereich von 50 W bis 100 W im Bereich von 9 mm bis 11 mm und bei einer Leistung im Bereich von 75 W bis 150 W im Bereich von 14 mm bis 16 mm liegen.

Zur **Lösung** der vorstehenden Aufgabe wird ein Verstärker gemäß Anspruch 15 vorgeschlagen.

Die in Zusammenhang mit dem erfindungsgemäßen Verfahren beschriebenen Merkmale können einzeln oder in Kombination auch bei dem Verstärker zur Anwendung kommen. Es ergeben sich die gleichen Vorteile, welche bereits beschreiben wurden.

Weitere Einzelheiten und Vorteile eines erfindungsgemäßen Verfahrens sowie eines Verstärkers sollen nachfolgend anhand eines in den Figuren schematisch dargestellten Ausführungsbeispiels der Erfindung exemplarisch erläutert werden. Darin zeigt:
- Fig. 1: schematisch den Aufbau des Verstärkers,
- Fig. 2: schematisch den Verstärkungsprozess mit den Intensitätsprofilen in beiden transversalen Richtungen,
- Fig. 3: ein mehrfach von der transformierten Seedlaserstrahlung durchlaufenes laseraktives Verstärkermedium und
- Fig. 4: nach Art kaskadierter Verstärkerstufen angeordnete Verstärkermedien.

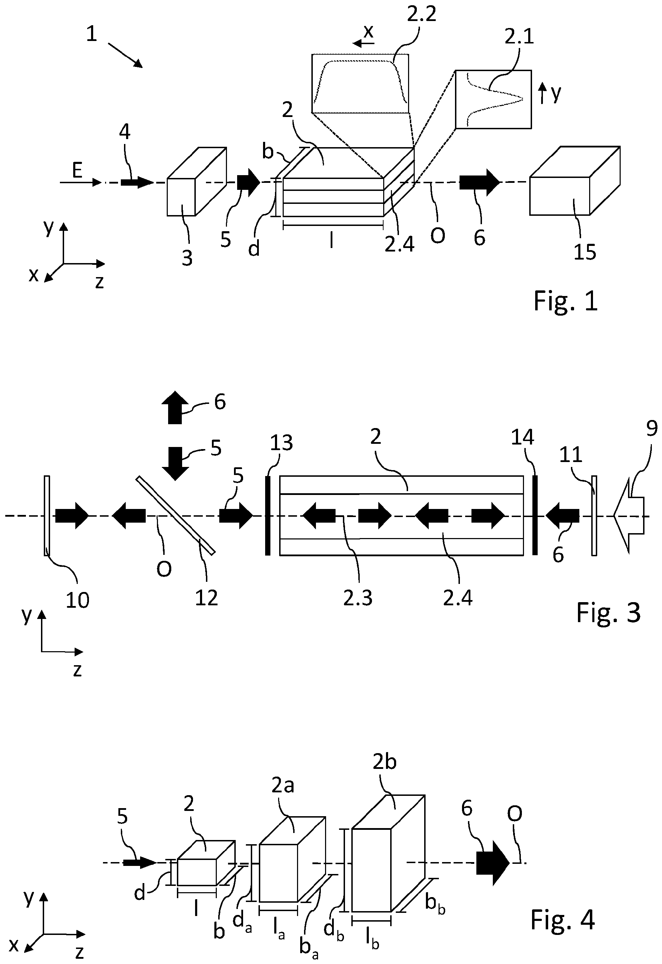

In der Fig. 1 ist der Aufbau des Verstärkers 1 schematisch dargestellt. Die zu verstärkende Seedlaserstrahlung 4 wird entlang der Einstrahlrichtung E in den Verstärker 1 mit dem laseraktiven Verstärkermedium 2 eingestrahlt. Das dargestellte xyz-Koordinatensystem wird in sämtlichen Darstellungen beibehalten, wobei die longitudinale Richtung Z entlang der Einstrahlrichtung E verläuft und die beiden transversalen Richtungen x, y rechtwinklig auf der longitudinalen Richtung z stehen. Die Richtung y verläuft entlang der Schnellen-Achse des Verstärkers 1 und die Richtung x entlang der Langsamen-Achse des Verstärkers 1.

Der Verstärker 1 umfasst ein einstrahlseitiges Transformatorelement 3, welches die Seedlaserstrahlung 4 derart transformiert, dass ein Seedlaser-Intensitätsprofil 4.1, 4.2 der Seedlaserstrahlung 4 in ein plateauförmiges Eingangs-Intensitätsprofil 5.1, 5.2 transformiert wird. Hierzu umfasst das Transformatorelement 3 mindestens ein, vorzugsweise mehrere optische Elemente. Diese optischen Elemente können, insbesondere Linsen, Asphären, azylindrische Linsen, diffraktive Elemente, Spiegel, totalreflektierende Mischelemente und/oder Blenden zur Transformation der Seedlaserstrahlung 4 sein. Je nach Anwendungsgebiet des Verstärkers 1 sowie der verwendeten optischen Elemente des Transformatorelements 3 kann die Phaseninformation der Seedlaserstrahlung 4 bei der Transformation erhalten werden oder verlorengehen.

Die transformierte Seedlaserstrahlung 5 propagiert, nachdem sie das Transformatorelement 3 verlassen hat, weiter entlang der optischen Achse O des Verstärkers 1. Dem Transformatorelement 3 entlang der optischen Achse A folgend ist in dem Verstärker 1 das laseraktive Verstärkermedium 2 angeordnet. Dieses Verstärkermedium 2 dient der Verstärkung der transformierten Seedlaserstrahlung 5. Es besteht aus Yb:YAG, Nb:YAG, Nd:YVO, Yb:LuO oder anderen laseraktiven Materialien, wie dotierte Kristalle und Gläser. Das Verstärkermedium 2 weist eine quaderförmige Geometrie auf, kann aber auch stabförmig oder scheibenförmig sein. Das Verstärkermedium 2 lässt sich aufgrund dieser quaderförmigen Geometrie besonders platzsparend in dem Verstärker 1 anordnen. Zudem wird durch die vorgegebene quaderförmige Geometrie des Verstärkermediums 2 ein Austausch des Verstärkermediums 2 zum Ersatz eines beschädigten Verstärkermediums 2 oder für die Verwendung eines aus einem anderen Kristall bestehenden Verstärkermediums erleichtert.

Die transformierte Seedlaserstrahlung 5 wird im Wesentlichen parallel zu einer Flächennormale des Verstärkermediums 2 parallel zur optischen Achse O in das Verstärkermedium 2 eingestrahlt. Reflexionen an der Oberfläche des Verstärkersmediums 2 können auf diese Weise vermieden werden. Zudem bewirkt ein derartiges Einstrahlen der transformierten Seedlaserstrahlung 5 in das laseraktive Verstärkermedium 2 einen einfach gestalteten, geradlinig verlaufenden Strahlengang 2.3 durch das Verstärkermedium 2.

Der Strahlengang 2.3 der transformierten Seedlaserstrahlung 5 durch das laseraktive Verstärkermedium 2 verläuft entlang eines Pumpkanals 2.4. In die Bereiche des laseraktiven Verstärkermediums 2, welche in diesem Pumpkanal 2.4 liegen, wird durch einen nicht dargestellten Pumpprozess, beispielsweise mittels Mikrowellenstrahlung oder eines Pumplasers, Energie zur Verstärkung der Seedlaserstrahlung deponiert. Die in dem Pumpkanal 2.4 deponierte Energie ist dabei nicht über den gesamten Pumpkanal 2.4 gleichmäßig verteilt, sondern variiert zwischen unterschiedlichen Regionen des Pumpkanals. Da die mittels des laseraktiven Verstärkermediums 2 erzielbare Verstärkung der Laserstrahlung von der deponierten Energiemenge abhängig ist, weist das gepumpte laseraktive Verstärkermedium 2 eine ortsabhängige Verstärkungsfunktion auf. Diese Verstärkungsfunktion folgt dabei entlang der transversalen Richtungen x, y, jeweils den Verstärkungsfunktionsprofilen 2.1, 2.2, welche sich quer zur Einstrahlrichtung E erstrecken.

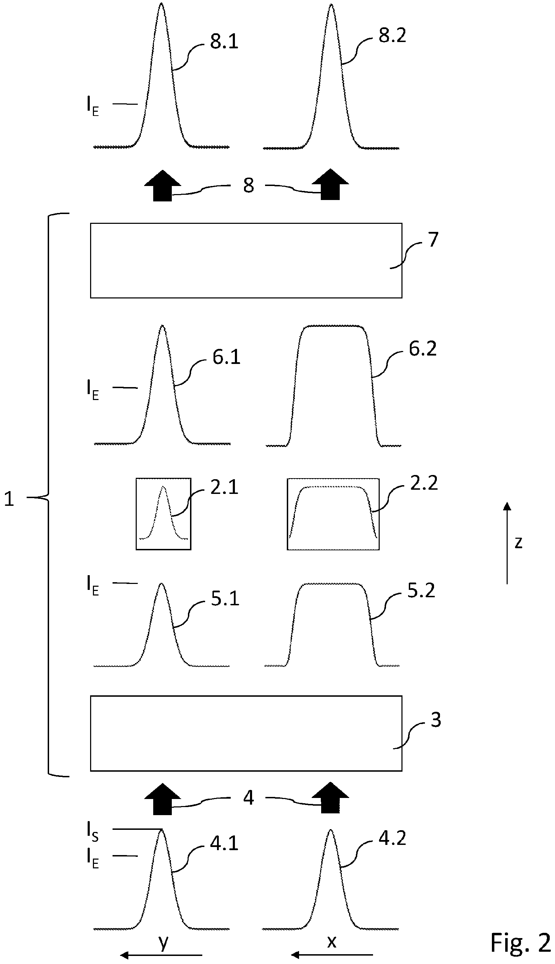

An diese Verstärkungsfunktionsprofile 2.1, 2.2 wird das Eingangs-Intensitätsprofil 5.1, 5.2 zur Erzielung einer hohen Extraktionseffizienz, d. h. dem Verhältnis zwischen bei der Verstärkung hinzugewonnener Laserleistung der verstärkten Seedlaserstrahlung 6 und in das Verstärkermedium 2 eingestrahlter Pumpleistung, angepasst, wie dies in Fig. 2 gezeigt ist. Zur Erzielung eine möglichst hohen Extraktionseffizienz wird dabei ein hoher räumlicher Überlapp zwischen dem Eingangs-Intensitätsprofil 5.1, 5.2 und dem Verstärkungsfunktionsprofil 2.1, 2.2 mit nach Möglichkeit weitgehend übereinstimmenden Profilformen angestrebt.

Auf der gegenüberliegenden Seite verlässt die nunmehr verstärkte Seedlaserstrahlung 6 das Verstärkermedium und propagiert entlang der optischen Achse O weiter. Im Strahlengang nachgeschaltete befindet sich ein optisches Elemente 15, welches an das Eingangs-Intensitätsprofil 5.1, 5.2 angepasst ist. Durch die Anpassung kann die Abbildung zwischen dem Verstärkermedium 2 und dem optischen Element 15 auf einfache Art und Weise erreicht werden. Die dem Verstärkermedium im Strahlengang nachgeschalteten optischen Elemente können beispielsweise optische Isolatoren gegen das Eintreten von Rückstreuungen in das Verstärkermedium, nichtlineare Kristalle zur Frequenzkonversion, Verzögerungsplatten oder Pockelszellen zur Polarisationsdrehung und/oder zum optischen Schalten sein.

In Fig. 2 sind die Laserintensitätsprofile während des Durchquerens des Verstärkers 1 für die beiden transversalen Richtungen x, y nebeneinander stehend dargestellt. Die Laserstrahlung propagiert dabei entlang der longitudinalen Richtung z in der Fig. 2 von unten nach oben. Die Seedlaserstrahlung 4 weist vor dem Eintritt in das Transformatorelement 3 in beide transversalen Richtungen x, y gaußförmige Seedlaser-Intensitätsprofile 4.1, 4.2 auf. Bei der Quelle der Seedlaserstrahlung 4 handelt es sich dabei um eine Laserquelle, welche im Wesentlichen Laserstrahlung in der Grundmode emittiert, wenngleich der Verstärker auch zusammen mit anderen Laserquellen verwendbar ist. Da es sich bei den Seedlaser-Intensitätsprofilen 4.1, 4.2 um die Intensitätsprofile der gleichen Seedlaserstrahlung 4, lediglich entlang zweier unterschiedlicher transversaler Richtungen x, y betrachtet, handelt, ist die Maximum-Intensität I_{S} im Maximum beider Seedlaser-Intensitätsprofile 4.1, 4.2 gleich.

Nach der Transformation durch das Transformatorelement 3 unterscheiden sich die Eingangs-Intensitätsprofile 5.1, 5.2 der transformierten Seedlaserstrahlung 5 von den Seedlaser-Intensitätsprofilen 4.1, 4.2. Zum einen weisen die Eingangs-Intensitätsprofile 5.1, 5.2 eine kleinere Maximum-Intensität I_{E} im Vergleich zur Maximum-Intensität Is auf. Diese Reduzierung der Maximum-Intensität I_{E} erfolgt dabei im Wesentlichen ohne einen Leistungsverlust, da die transformierte Seedlaserstrahlung 5 im Vergleich zu der Seedlaserstrahlung 4 aufgeweitet wird. Die Gesamtleistung der Seedlaserstrahlung 4 kann auf diese Weise auf einen größeren Bereich verteilt werden und so eine reduzierte Leistungsdichte erreicht werden. Durch Reduktion der Leistungsdichte lassen sich dabei auch Seedlaserstrahlungen 4 verstärken, deren Leistungsdichte so hoch ist, dass eine Einstrahlung der nicht transformierten Seedlaserstrahlung 4 in das Verstärkermedium 2 störende thermische Effekte verursachen oder gar zu einer Beschädigung des Verstärkermediums 2, insbesondere aufgrund der Verstärkung während der Propagation durch das Verstärkermedium 2, führen würde.

Um die beschriebene Aufweitung der transformierten Seedlaserstrahlung 5 zu erreichen, weist diese eine nicht der Grundmode der Seedlaserstrahlung 4 entsprechende Schwingungsmode auf. Diese zusätzliche Schwingungsmode bewirkt entlang der transversalen Richtung x eine Aufweitung der transformierten Seedlaserstrahlung 5 und somit einer Verbreiterung des Eingangs-Intensitätsprofils 5.2. Entlang der transversalen Richtung y hat diese zusätzliche Schwindungsmode keinen Einfluss auf das Eingangs-Intensitätsprofil 5.1. Neben der Reduzierung der Leistungsdichte wird mittels der zusätzlichen Schwingungsmode eine Anpassung der Eingangs-Intensitätsprofile 5.1, 5.2 an die Verstärkungsfunktionsprofile 2.1, 2.2 des Verstärkermediums 2 erzielt.

Das Seedlaser-Intensitätsprofil 4.2 wird durch das einstrahlseitige Transformatorelement 3 in ein plateauförmiges Eingangs-Intensitätsprofil 5.2 transformiert. Die Eingangs-Intensitätsprofile 5.1, 5.2 sind dabei auch hinsichtlich ihrer Form an die Verstärkungsfunktionsprofile 2.1, 2.2 des laseraktiven Verstärkermediums 2 entlang der jeweiligen transversalen Richtung x, y angepasst.

Das Eingangs-Intensitätsprofil 5.2 weist dabei ein im Wesentlichen rechteckförmiges Super-Gauß-Profil auf. Mit diesem lässt sich die Maximum-Intensität I_{E} konstant über einen weiten entlang der transversalen Richtung x verlaufenden Bereich zur Verfügung stellen. Das Eingangs-Intensitätsprofil 5.2 entspricht so dem Verstärkungsfunktionsprofil 2.2, welches durch einen sich über die Breite des Verstärkermediums 2 im Wesentlichen rechteckförmig erstreckenden Pumpkanal 2.4 hervorgerufen wird, entlang dessen das Verstärkermedium 2 in transversaler Richtung x gleichmäßig gepumpt wird.

Die Eingangs-Intensitätsprofile 5.1, 5.2 der durch das Transformatorelement 3 transformierten Seedlaserstrahlung 5 weisen beide einen kontinuierlichen Flankenverlauf ohne Unstetigkeiten oder Sprungstellen auf. Durch diesen Flankenverlauf weisen die Bereiche der transformierten Seedlaserstrahlung 5, welche in den Randbereichen in das Verstärkermedium 2 eintretenden, vergleichsweise geringe Intensitäten auf. Einflüsse von Beugungseffekten, welche gerade in den Randbereichen des Verstärkermediums 2 auftreten können, werden hierdurch reduziert, da lediglich vergleichsweise geringe Intensitäten von diesen betroffen werden. Der kontinuierliche Flankenverlauf wirkt sich zudem auf die Güte etwaig später erfolgender weiterer Transformationen aus, da keine Unstetigkeiten oder Sprungstellen mit den damit verbundenen höheren Schwingungsfrequenzen vorhanden sind.

Entlang der zweiten transversalen Richtung y wird nach der Transformation die Form des Seedlaser-Intensitätsprofils 4.1 durch den Eingangs-Intensitätsprofil 5.1 weiter beibehalten. Lediglich die Maximum-Intensität Is wird auf die Maximum-Intensität I_{E} verringert. Insbesondere entlang der Schnellen-Achse des Verstärkers 1, entlang welcher das Verstärkermedium 2 und der Pumpkanal 4.2 die kleinste transversale Ausdehnung aufweist und entlang derer die Divergenz des Laserstrahls entsprechend am größten ist, bietet dies den Vorteil, dass die Strahlqualität auch nach der Transformation beibehalten wird.

Während der Propagation der transformierten Seedlaserstrahlung 5 durch das laseraktive Verstärkermedium 2 wird die in dem Pumpkanal 4.2 gepumpte Energie im Bereich des Überlapps zwischen der transformierten Seedlaserstrahlung 5 und der Verstärkungsfunktion 2.1, 2.1 derart zur Verstärkung der Laserstrahlung verwendet, dass aus einer Austrittsseite des laseraktives Verstärkermediums 2 eine verstärkte Seedlaserstrahlung 6 entlang der optischen Achse des Verstärkers 1 austritt. Auch die Form der Ausgangs-Intensitätsprofile 6.1, 6.2 der verstärkten Seedlaserstrahlung 6 entspricht der Form der Eingangs-Intensitätsprofile 5.1, 5.2. Die Intensität der Ausgangs-Intensitätsprofile 6.1, 6.2 ist hingegen gegenüber den Eingangs-Intensitätsprofilen 5.1, 5.2 durch das laseraktive Verstärkermedium 2 deutlich verstärkt worden. Zur Veranschaulichung ist an dem Ausgangs-Intensitätsprofil 6.1 die Maximum-Intensität I_{E} qualitativ angedeutet. Die quantitative Verstärkung kann dabei abhängig von der Leistung der Seedlaserstrahlung 4 und des verwendeten laseraktiven Verstärkermediums 2 im Bereich zwischen 2 und 1.000 liegen. Dabei können große Verstärkungsfaktoren insbesondere für leistungsschwächere Seedlaserstrahlung 4 erzielt werden, während für leistungsstärkere Seedlaserstrahlung 4, beispielsweise 100 W, geringere Verstärkungsfaktoren, z. B. 20, erreicht werden.

Die derart verstärkte Seedlaserstrahlung 6 mit ihren Ausgang-Intensitätsprofilen 6.1, 6.2 kann für Anwendungen, wie beispielsweise Laser-Annealing, verwendet werden. Die verstärkte Seedlaserstrahlung 6 weist insbesondere entlang der transversalen Richtung x aufgrund der mehreren vorhandenen Schwingungsmoden eine geringe Strahlenqualität mit einer Beugungsmaßzahl M² >10 auf. Insbesondere für industrielle Anwendungen, für welche eine linienförmige Gestalt der Laserstrahlung wichtiger als die Strahlqualität ist, erweist sich die Verwendung der Verstärkung der Seedlaserstrahlung 6 als vorteilhaft. Gerade wenn mittels des Transformatorelements 3 bereits eine Homogenisierung der Strahlung bei der Transformation stattgefunden hat, kann die verstärkte Seedlaserstrahlung 6 unmittelbar ohne weiteres Transformieren oder Homogenisieren für solche industriellen Anwendungen eingesetzt werden.

Die dem Verstärkermedium 2 nachgeschalteten optischen Elemente 15, wie beispielsweise hier nicht dargestellte optische Isolatoren, nichtlineare Kristalle, Verzögerungsplatten oder Pockelszellen, sind zur Vereinfachung und zur Verbesserung der Abbildung an das Eingangs-Intensitätsprofil 5.1, 5.2 angepasst. Wie in Fig. 2 gezeigt, entspricht die Form des Eingangs-Intensitätsprofils 5.1, 5.2 auch der Profilform des Ausgangs-Intensitätsprofil 6.1, 6.2. Um ein derartig angepasstes optisches Element handelt es sich auch bei dem Rücktransformatorelement 7, welches dem Verstärkermedium nachgeschaltet ist.

Mit dem Rücktransformatorelement 7, welches nach Art eines Transformatorelements 3 ausgebildet ist, wird die verstärkte Seedlaserstrahlung 6 in eine rücktransformierte Seedlaserstrahlung 8 transformiert. Die Ausgangs-Intensitätsprofile 6.1, 6.2 werden dabei in die Intensitätsprofile 8.1, 8.2 überführt. Diese Intensitätsprofile 8.1. 8.2 entsprechen in ihrer Form den Seedlaser-Intensitätsprofilen 4.1, 4.2, sind im Gegensatz zu diesen jedoch in ihrer Intensität und Leistung verstärkt. Neben ihren Intensitäten können sich die Intensitätsprofile 4.1, 4.2, 8.1, 8.2 auch bei gleichen Formen in Funktionsparametern, wie beispielsweise der Gaußbreite bei gaußförmiger Seedlaserstrahlung 4 und rücktransformierter Seedlaserstrahlung 8, zueinander unterscheiden.

Die Intensitätsprofile 8.1, 8.2 sind auch gegenüber den Ausgangs-Intensitätsprofilen 6.1, 6.2 verstärkt. Denn durch die Rücktransformation mittels des Rücktransformatorelements 7 wird die rücktransformierte Seedlaserstrahlung 8 derart gebündelt, dass die Leistungsdichte der rücktransformierten Seedlaserstrahlung 8 im Vergleich zur Leistungsdichte der verstärkten Seedlaserstrahlung 6 erhöht wird. Bei einer im Wesentlichen gleichbleibenden Gesamtleistung der Laserstrahlung vor und hinter dem Rücktransformatorelement 7 verringert sich somit die transversale Ausdehnung der rücktransformierten Seedlaserstrahlung 8. Insbesondere wenn die Phaseninformationen bei der Transformation mittels des Transformatorelements 3 erhalten geblieben sind, kann die Seedlaserstrahlung 4 auf diese Weise effektiv so verstärkt werden, dass die rücktransformierte Seedlaserstrahlung 8 einer verstärkten Seedlaserstrahlung 4 mit gleiche Strahlqualität entspricht. Hierfür kann ein Verstärkermedium 2 genutzt werden, welches für eine direkte Verstärkung der Seedlaserstrahlung 4 nicht einsetzbar wäre, da beispielsweise die Leistungsdichte der Seedlaserstrahlung über der Zerstörungsschwelle des Verstärkermediums 2 liegt. Alternativ kann die rücktransformierte Seedlaserstrahlung 8 auch mittels des Rücktransformatorelements 7 weiter aufgeweitet werden.

Eine weitere Erhöhung der Verstärkung mittels des Verstärkers 1 lässt sich durch die Fig. 3 gezeigte Anordnung erreichen. Hierbei wird die bereits mittels des hier nicht dargestellten Transformatorelements 3 transformierte Seedlaserstrahlung 5 über ein Umlenkelement 12, bei dem es sich um einen teiltransparenten Spiegel handeln kann, auf die optische Achse O gelenkt, entlang derer die verstärkte Seedlaserstrahlung 6 in das laseraktive Verstärkermedium 2 eintreten kann. Vor dem Eintreten in das Verstärkermedium 2 passiert die transformierte Seedlaserstrahlung 5 ein optisches Element 13 zur Polarisationsdrehung, wie eine Verzögerungsplatte, insbesondere ein A/4-Plättchen.

Auf der dem Umlenkelement 12 gegenüberliegenden Seite des Verstärkermediums 2 kann die verstärkte Seedlaserstrahlung 6 das Verstärkermedium 2 verlassen. Dort passiert sie ein weiteres optisches Element 14 zur Polarisationsdrehung und wird durch ein Reflektorelement 11 entlang desselben Strahlengangs 2.3 durch das optische Element 14 und den Pumpkanal 2.4 des laseraktiven Verstärkermediums 2 zurückreflektiert. Beim erneuten Durchqueren des Pumpkanals 2.4 entlang des Strahlengangs 2.3 kann eine weitere Verstärkung der Laserstrahlung erfolgen. Die derart verstärkte Seedlaserstrahlung 6 tritt aus der ursprünglichen Einstrahlseite des Verstärkermediums 2 aus und passiert erneut das optische Element 13. Durch die beiden optischen Elemente 13, 14 ist die Polarisation der verstärkten Seedlaserstrahlung 6 nun derart gedreht, dass sie auf der optischen Achse O durch das Umlenkelement 12 propagieren kann, ohne abgelenkt zu werden.

Die verstärkte Seedlaserstrahlung 6 kann nun entweder durch ein nicht dargestelltes Auskoppelelement, beispielsweise einer Pockelszelle, aus dem Verstärker 1 geführt oder mittels eines zweiten Reflektorelements 10 erneut zur Verstärkung in das laseraktive Verstärkermedium 2 zurückreflektiert werden. Bei einer Zurückreflexion der verstärkten Seedlaserstrahlung 6 wird diese in dem Verstärkermedium 2 erneut verstärkt und erfährt weitere Phasendrehungen durch die optischen Elemente 13, 14. Nach zwei weiteren Durchquerung des laseraktiven Verstärkermediums 2 kann die verstärke Seedlaserstrahlung 6, insbesondere bei der Verwendung von λ/4-Plättchen als optische Elemente 13, 14, über das Umlenkelement 12 von der optischen Achse O abgelenkt werden und den Verstärker 1 verlassen.

Da die transformierte Seedlaserstrahlung 5 beim mehrmaligen Durchqueren des Verstärkermediums 2 stets entlang des gleichen Strahlengangs 2.3 geführt und dabei verstärkt wird, ergibt sich trotz mehrmaligen Durchlaufens des Verstärkermediums 2 eine kompakte Bauform des Verstärkers. Dies gestattet zugleich die Verwendung des gesamten sich im Pumpkanal 2.4 befindlichen Teil des Verstärkermediums 2 zur Verstärkung bei jedem Durchlauf der Laserstrahlung durch das Verstärkermedium 2. Ein bis zu viermaliges Durchqueren des Pumpkanals 2.4 des Verstärkermediums 2 hat sich hierbei als vorteilhaft erwiesen.

In Fig. 3 ist zudem ein Verfahren zum Pumpen des laseraktiven Verstärkermediums 2 gezeigt. Dabei wird ein Pumplaserstrahl 9 entlang der gleichen Richtung wie die transformierte Seedlaserstrahlung 5 in das Verstärkermedium 2 eingestrahlt. Als Quelle für diesen Pumplaserstrahl 9 kann ein Diodenlaserbarren dienen, bei welchem mehrere Laserdioden linienförmig nebeneinander entlang der x-Richtung angeordnet sind. Die Laserstrahlung dieser einzelnen Dioden überlagert sich dabei zu dem Pumplaserstrahl 9. Dieser weist entlang der transversalen γ-Richtung eine im Vergleich zur transversalen x-Richtung geringere Ausdehnung auf und ist insoweit im Wesentlichen linienförmig. Mittels des eingestrahlten Pumplaserstrahls 9 wird in dem Pumpkanal 2.4 des Verstärkermediums 2 eine Energie deponiert, welche in Abhängigkeit der erzielten Extraktionseffizienz teilweise zur Verstärkung der transformierten Seedlaserstrahlung 5 verwendet wird. Vorzugsweise erfolgt das Pumpen mittels des Pumplaserstrahls 9 derart, dass vor jeder Propagation der transformierte Seedlaserstrahlung 5 oder der verstärkten Seedlaserstrahlung 6 durch das laseraktive Verstärkermedium 2 das in dem Pumpkanal 2.4 befindliche laseraktive Verstärkermedium 2 gepumpt wird. Etwaig bereits zur Verstärkung aus diesem Verstärkungsmedium 2 entnommenen Energien werden dabei nachgeführt. Das nicht dargestellte Intensitätsprofil des Pumplaserstrahls 9 entspricht vorzugsweise dem Eingangs-Intensitätsprofil 5.1, 5.2. Ein Pumplaserstrahl 9 mit einem derartigen Intensitätsprofil deponiert dabei derart Energie in dem laseraktiven Verstärkermedium 2, dass dessen Verstärkungsfunktionsprofile 2.1, 2.2 der Profilform des Pumplaserstrahls 9 und somit den Profilformen der Eingangs-Intensitätsprofile 5.1, 5.2 entsprechen. Eine Anpassung der Eingangs-Intensitätsprofile 5.1, 5.2 an die Verstärkerfunktionsprofile 2.1, 2.2 ergibt sich so auf einfache konstruktive Weise. Um das Einstrahlen des Pumplaserstrahls 9 in das laseraktive Verstärkermedium 2 zu ermöglichen, ist das Reflektorelement 11 in dem in Fig. 3 dargestellten Aufbau zumindest für den Wellenlängenbereich des Pumplaserstrahls 9 mindestens teiltransparent, insbesondere ganz transparent.

Um eine weitere Verstärkung zu ermöglichen, kann alternativ oder zusätzlich auch die in Fig. 4 schematisch dargestellte Anordnung mehrere Verstärkermedien 2, 2a, 2b als kaskadierte Verstärkerstufen genutzt werden. Die bereits durch das Transformatorelement 3 transformierte Seedlaserstrahlung 5 wird entlang der optischen Achse O zunächst in das Verstärkermedium 2 eingestrahlt. Bei der Propagation durch dieses Verstärkermedium wird die transformierte Seedlaserstrahlung 5 verstärkt und tritt auf der gegenüberliegenden Seite aus dem laseraktiven Verstärkermedium 2 aus. Hieran anschließend tritt sie in ein zweites laseraktives Verstärkermedium 2a ein und wird durch dieses weiter verstärkt. Im Anschluss an dieses zweite Verstärkermedium 2a wird die Laserstrahlung weiter mittels des dritten laseraktiven Verstärkermediums 2b verstärkt und tritt als mittels dieser drei Stufen verstärkte Seedlaserstrahlung 6 aus. Die hier dargestellten Abstände zwischen den Verstärkermedien 2, 2a, 2b entlang der optischen Achse O dienen im Wesentlichen der besseren Darstellung. Die Abstände können bei einer technischen Umsetzung derart kaskadierter Verstärkerstufen entfallen. Ebenso können zwischen den einzelnen Verstärkermedien 2, 2a, 2b ein oder mehrere optische Elemente angeordnet sein. Diese können beispielsweise Linsen, Asphären, azylindrische Linsen, diffraktive Elemente, Spiegel, totalreflektierende Mischelemente und/oder Blenden zur Abbildung der aus einem Verstärkermedium 2, 2a austretenden Laserstrahlung auf ein folgendes Verstärkermedium 2a, 2b oder optische Isolatoren, nichtlineare Kristalle, Verzögerungsplatten und/oder Pockelszellen zur Beeinflussung des Transmissionsverhaltens der Verstärkers 1 sein.

Die einzelnen Verstärkermedien 2, 2a, 2b können anwendungsbezogen unterschiedlich gewählt werden. Dabei können sie sich hinsichtlich des verwendeten Materials und/oder ihrer Abmessungen, insbesondere in ihren Längen l, lₐ, l_{b}, Breiten b, bₐ, b_{b} und/oder Dicken d, dₐ, d_{b}, unterscheiden. Die Anzahl der als kaskadierte Verstärkerstufen ausgebildeten Verstärkermedien 2 ist dabei nicht auf die dargestellten drei Verstärkermedien 2, 2a, 2b beschränkt. Es können auch mehr oder weniger Verstärkermedien 2, 2a, 2b miteinander kaskadiert angeordnet werden. Verstärkermedien 2 unterschiedlicher transversaler Dicke d ermöglichen dabei eine Anpassung der kaskadierten Verstärkerstufen an die Divergenz der transformierten Seedlaserstrahlung 5, welche insbesondere entlang der in Richtung y verlaufenden Schnellen-Achse auftritt und zu einer Verbreiterung der Strahlung bei Propagation führt. Im Strahlengang des Verstärkers 1 entlang der optischen Achse O weiter hinten liegende Verstärkermedien 2b weisen dabei vorzugsweise eine größere Dicke d_{b} auf, als weiter vorne im Strahlengang liegende Verstärkermedien 2, 2a der Dicke d, dₐ. Dies ist auch in Fig. 4 zu erkennen, denn die Dicke d des Verstärkermediums 2 ist kleiner als die Dicke dₐ des zweiten Verstärkermediums 2a, welche wiederum kleiner ist als die Dicke d_{b} des dritten Verstärkermediums 2b.

Um diesen unterschiedlichen Dicken d, dₐ, d_{b} der Verstärkermedien 2, 2a, 2b sowie den für eine divergierende transformierte Seedlaserstrahlung 5 ebenfalls breiter zu wählenden Pumpkanälen 2.4 der jeweiligen Verstärkermedien 2 Rechnung zu tragen, hat es sich bei einer Anordnung mehrerer Verstärkermedien 2 nach Art kaskadierter Verstärkerstufen als vorteilhaft erwiesen, wenn jeder Verstärkerstufe ein eigener Pumplaserstrahl 9 zugeordnet ist. Dieser Pumplaserstrahl 9 deponiert Energie entlang der transversalen Richtung x und damit quer zu der optischen Achse O in den jeweiligen Verstärkermedien 2. Eine Beeinflussung eines Verstärkermediums 2 durch einen zu einem anderen Verstärkermedium 2 gehörigen Pumplaserstrahl 9 wird so auf einfache Art verhindert.

Eine weitere Anpassung der transversalen Abmessungen der kaskadierten Verstärkerstufen kann anhand der transversalen Breite b der einzelnen Verstärkermedien 2 erfolgen. Anders als eine Anpassung der Dicke d der Verstärkermedien 2 dient eine Anpassung der Breite b in erster Linie nicht dem Ausgleich der Divergenz der transformierten Seedlaserstrahlung 5, sondern vielmehr eine Anpassung an die Leistung der in das Verstärkermedium 2 eingestrahlten Laserstrahlung. So kann für die Verstärkung einer vergleichsweise leistungsschwachen Seedlaserstrahlung 4 ein Verstärkermedium mit geringerer transversaler Breite b vorgesehen sein. Für die Verstärkung einer leistungsstarken Seedlaserstrahlung 4 kann hingegen ein Verstärkermedium 2 großer transversaler Breite vorgesehen sein. Für leistungsarme Seedlaserstrahlungen 4 kann auf diese Weise eine kostengünstige, da lediglich ein kleines Verstärkermedium erfordernde Verstärkung erfolgen, während für eine leistungsstarke Seedlaserstrahlung 4 ein vergleichsweise breites Verstärkermedium 2 verwendet werden kann, welches eine stärker aufgeweitete transformierte Seedlaserstrahlung 5 verstärken kann, bei welcher trotz leistungsstarker Seedlaserstrahlung 4 durch die Verbreiterung bei der Transformation eine Leistungsdichte erreicht werden kann, die unterhalb der Zerstörungsschwelle des Verstärkermediums 2 liegt. Der Verstärker 1 kann dabei derart modular aufgebaut sein, dass sich das jeweils verwendete Verstärkermedium 2 abhängig von der Gesamtleistung der Seedlaserstrahlung 4 austauschen lässt, ohne dass die übrigen Bauteile des Verstärkers 1 hierdurch beeinflusst werden.

Wie in Fig. 4 dargestellt, ist auch eine Kombination aus mehreren nach Art kaskadierter Verstärkerstufen hintereinander geschalteter Verstärkermedien 2 mit unterschiedlichen Dicken d zum Ausgleich der Divergenz und/oder unterschiedlichen Breiten b zur Anpassung an die Leistungsdichte der jeweils in die Verstärkermedien 2, 2a, 2b eintretenden, durch das vorangehende Verstärkermedium 2, 2a, 2b verstärkten Laserstrahlung möglich.

Mit Hilfe des vorstehend beschriebenen Verfahrens und dem Verstärker 1 ist es möglich, Seedlaserstrahlung effizienter zu verstärken.

### Bezugszeichen:

- 1: Verstärker
- 2, 2a, 2b: laseraktives Verstärkermedium
- 2.1: Verstärkungsfunktionsprofil
- 2.2: Verstärkungsfunktionsprofil
- 2.3: Strahlengang
- 2.4: Pumpkanal
- 3: Transformatorelement
- 4: Seedlaserstrahlung
- 4.1: Seedlaser-Intensitätsprofil
- 4.2: Seedlaser-Intensitätsprofil
- 5: transformierte Seedlaserstrahlung
- 5.1: Eingangs-Intensitätsprofil
- 5.2: Eingangs-Intensitätsprofil
- 6: verstärkte Seedlaserstrahlung
- 6.1: Ausgangs-Intensitätsprofil
- 6.2: Ausgangs-Intensitätsprofil
- 7: Rücktransformatorelement
- 8: rücktransformierte Seedlaserstrahlung
- 8.1: Intensitätsprofil
- 8.2: Intensitätsprofil
- 9: Pumplaserstrahl
- 10: Reflektorelement
- 11: Reflektorelement
- 12: Umlenkelement
- 13: optisches Element
- 14: optisches Element
- 15: optisches Element
- E: Einstrahlrichtung
- I_{E}: Maximum-Intensität
- I_{S}: Maximum-Intensität
- O: optische Achse
- b, bₐ, b_{b}: Breite
- d, dₐ, d_{b}: Dicke
- l, lₐ, l_{b}: Länge
- x: transversale Richtung
- y: transversale Richtung
- z: longitudinale Richtung

## Patentansprüche

1. Verfahren zur Verstärkung einer Seedlaserstrahlung (4), welche entlang einer Einstrahlrichtung (E) in ein laseraktives Verstärkermedium (2) eingestrahlt wird, wobei das laseraktive Verstärkermedium eine senkrecht zur Einstrahlrichtung langsame Achse (X) und eine zur langsamen Achse (X) orthogonale schnelle Achse (Y) besitzt,
wobei die Seedlaserstrahlung (4) ein transversales Seedlaser-Intensitätsprofil (4.1, 4.2) aufweist, welches durch ein einstrahlseitiges Transformatorelement (3) in ein entlang der langsamen Achse (X) plateauförmiges Eingangs-Intensitätsprofil (5.1, 5.2) transformiert wird, wobei das Transformatorelement (3) vor dem laseraktiven Verstärkermedium angeordnet ist,
wobei das Eingangs-Intensitätsprofil (5.1, 5.2) die Form des Seedlaser-Intensitätsprofils (4.1, 4.2) entlang der schnellen Achse (Y) beibehält.

2. Verfahren nach Anspruch 1, wobei das Eingangs-Intensitätsprofil (5.1, 5.2) an ein sich quer zur Einstrahlrichtung (E) erstreckendes Verstärkungsfunktionsprofil (2.1, 2.2) des Verstärkermediums (2) angepasst wird.

3. Verfahren nach Anspruch 1 oder 2, wobei das Seedlaser-Intensitätsprofil (4.1, 4.2) glockenkurvenförmig, insbesondere gaußförmig, ist.

4. Verfahren nach einem der vorangehenden Ansprüche, wobei die transformierte Seedlaserstrahlung (5) eine Schwingungsmode aufweist, welche nicht der Grundmode der Seedlaserstrahlung (4) entspricht.

5. Verfahren nach einem der vorangehenden Ansprüche, wobei , die Maximum-Intensität (I_{E}) des Eingangs-Intensitätsprofils (5.1, 5.2) kleiner ist als die Maximum-Intensität (I_{S}) des Seedlaser-Intensitätsprofils (4.1, 4.2).

6. Verfahren nach einem der vorangehenden Ansprüche, wobei das Verstärkermedium (2) zur Verstärkung der Seedlaserstrahlung (4) quaderförmig ist.

7. Verfahren nach einem der vorangehenden Ansprüche, wobei die Seedlaserstrahlung (4) im Wesentlichen parallel zu einer Flächennormalen einer Seitenfläche des Verstärkermediums (2), insbesondere parallel zu einer optischen Achse (O) des Verstärkers (1), in das Verstärkermedium (2) eingestrahlt wird.

8. Verfahren nach einem der vorangehenden Ansprüche, wobei das Verstärkermedium (2), insbesondere entlang desselben Strahlengangs (2.3) durch das Verstärkermedium (2), mehrfach von der transformierten Seedlaserstrahlung (5) durchlaufen wird.

9. Verfahren nach einem der vorangehenden Ansprüche, wobei im Transformatorelement (3) optische Elemente, insbesondere Linsen, Asphären, azylindrische Linsen, diffraktive Elemente, Spiegel, totalreflektierende Mischelemente und/oder Blenden, verwendet werden.

10. Verfahren nach einem der vorangehenden Ansprüche, wobei dem Verstärkermedium (2) im Strahlengang nachgeschaltete optische Elemente (15) an das Eingangs-Intensitätsprofil (5.1, 5.2) angepasst werden.

11. Verfahren nach einem der vorangehenden Ansprüche, wobei durch ein Rücktransformatorelement (7), insbesondere nach Art eines Transformatorelements (3), das Ausgangs-Intensitätsprofil (6.1, 6.2) der verstärkten Seedlaserstrahlung (6) zurück transformiert wird, insbesondere in ein dem Seedlaser-Intensitätsprofil (4.1, 4.2) gleichendes Intensitätsprofil (8.1, 8.2).

12. Verfahren nach einem der vorangehenden Ansprüche, wobei das Verstärkermedium (2) von einem Pumplaserstrahl (9) gepumpt wird, dessen Intensitätsprofil dem Eingangs-Intensitätsprofil (5.1, 5.2) entspricht.

13. Verfahren nach einem der vorangehenden Ansprüche, wobei mehrere Verstärkermedien (2) entlang des Strahlengangs nach Art kaskadierter Verstärkerstufen hintereinander geschaltet werden.

14. Verfahren nach einem der vorangehenden Ansprüche, wobei eine transversale Breite (b) des Verstärkermediums (2) leistungsabhängig gewählt wird.

15. Verstärker zur Verstärkung einer Seedlaserstrahlung (4), welche entlang einer Einstrahlrichtung (E) in ein laseraktives Verstärkermedium (2) eingestrahlt wird, wobei das laseraktive Verstärkermedium eine senkrecht zur Einstrahlrichtung langsame Achse (X) und eine zur langsamen Achse (X) orthogonale schnelle Achse (Y) besitzt,
wobei die Seedlaserstrahlung (4) ein transversales Seedlaser-Intensitätsprofil (4.1, 4.2) aufweist, wobei der Verstärker ein einstrahlseitiges Transformatorelement (3) welches vor dem laseraktiven Verstärkermedium angeordnet ist, aufweist, welches derart ausgelegt ist, dass die Seedlaserstrahlung in ein entlang der langsamen Achse (X) plateauförmiges Eingangs-Intensitätsprofil (5.1, 5.2) transformiert wird,
wobei das Eingangs-Intensitätsprofil (5.1, 5.2) die Form des Seedlaser-Intensitätsprofils (4.1, 4.2) entlang der Schnellen-Achse (Y) beibehält.

## Claims

1. A method for amplifying a seed laser radiation (4) which is irradiated along an irradiation direction (E) into a laser-active amplifier medium (2), the laser-active amplifier medium having a slow axis (X) perpendicular to the irradiation direction and a fast axis (Y) orthogonal to the slow axis (X), wherein the seed laser radiation (4) has a transverse seed laser intensity profile (4.1, 4.2) which is transformed by an irradiation-side transformer element (3) into an input intensity profile (5.1, 5.2) being plateau-shaped along the slow axis (X), wherein the transformer element (3) is arranged in front of the laser-active amplifier medium, the input intensity profile (5.1, 5.2) retaining the shape of the seed laser intensity profile (4.1, 4.2) along the fast axis (Y).

2. The method according to Claim 1, wherein the input intensity profile (5.1, 5.2) is adapted to an amplification function profile (2.1, 2.2) of the amplifier medium (2) extending transversely to the irradiation direction (E).

3. The method according to Claim 1 or 2, wherein the seed laser intensity profile (4.1, 4.2) is a bell-shaped curve, in particular Gaussian.

4. The method according to one of the preceding claims, wherein the transformed seed laser radiation (5) has an oscillation mode which does not correspond to the fundamental mode of the seed laser radiation (4).

5. The method according to one of the preceding claims, wherein the maximum intensity (I_{E}) of the input intensity profile (5.1, 5.2) is smaller than the maximum intensity (I_{S}) of the seed laser intensity profile (4.1, 4.2).

6. The method according to one of the preceding claims, wherein the amplifier medium (2) for amplifying the seed laser radiation (4) is cuboid.

7. The method according to one of the preceding claims, wherein the seed laser radiation (4) is radiated into the amplifier medium (2) substantially parallel to a surface normal of a side surface of the amplifier medium (2), in particular parallel to an optical axis (O) of the amplifier (1).

8. The method according to one of the preceding claims, wherein the transformed seed laser radiation (5) passes through the amplifier medium (2) several times, in particular along the same beam path (2.3) through the amplifier medium (2).

9. The method according to one of the preceding claims, wherein optical elements, in particular lenses, aspheres, acylindrical lenses, diffractive elements, mirrors, totally reflecting mixing elements and/or diaphragms, are used in the transformer element (3).

10. The method according to one of the preceding claims, wherein optical elements (15) arranged downstream of the amplifier medium (2) in the beam path are adapted to the input intensity profile (5.1, 5.2).

11. The method according to one of the preceding claims, wherein the output intensity profile (6.1, 6.2) of the amplified seed laser radiation (6) is transformed back by a reverse transformer element (7), in particular in the manner of a transformer element (3), in particular into an intensity profile (8.1, 8.2) similar to the seed laser intensity profile (4.1, 4.2).

12. The method according to one of the preceding claims, wherein the amplifier medium (2) is pumped by a pump laser beam (9) for which the intensity profile corresponds to the input intensity profile (5.1, 5.2).

13. The method according to one of the preceding claims, wherein a plurality of amplifier media (2) are connected in series along the beam path in the manner of cascaded amplifier stages.

14. The method according to one of the preceding claims, wherein a transverse width (b) of the amplifier medium (2) is selected contingent on performance.

15. An amplifier for amplifying a seed laser radiation (4), which is irradiated along an irradiation direction (E) into a laser-active amplifier medium (2), the laser-active amplifier medium having a slow axis (X) perpendicular to the irradiation direction and a fast axis (Y) orthogonal to the slow axis (X), wherein the seed laser radiation (4) has a transverse seed laser intensity profile (4.1, 4.2), wherein the amplifier has an irradiation-side transformer element (3), which is arranged in front of the laser-active amplifier medium, which is designed in such a way that the seed laser radiation is transformed into an input intensity profile (5.1, 5.2) that is plateau-shaped along the slow axis (X), wherein the input intensity profile (5.1, 5.2) maintains the shape of the seed laser intensity profile (4.1, 4.2) along the fast axis (Y).

## Revendications

1. Procédé d'amplification d'un rayonnement laser d'ensemencement (4), lequel est émis le long d'une direction de rayonnement (E) dans un milieu amplificateur (2) actif au laser, dans lequel le milieu amplificateur actif au laser comporte un axe lent (X) perpendiculaire à la direction de rayonnement et un axe rapide (Y) orthogonal à l'axe lent (X), dans lequel le rayonnement laser d'ensemencement (4) présente un profil transversal d'intensité (4.1, 4.2) du laser d'ensemencement, lequel est transformé par un élément transformateur (3) côté rayonnement en un profil d'intensité (5.1, 5.2) d'entrée en forme de plateau le long de l'axe lent (X), dans lequel l'élément transformateur (3) est placé devant le milieu amplificateur actif laser, dans lequel le profil d'intensité (5.1, 5.2) d'entrée conserve la forme du profil d'intensité (4.1, 4.2) du laser d'ensemencement le long de l'axe rapide (Y).

2. Procédé selon la revendication 1, dans lequel le profil d'intensité (5.1, 5.2) d'entrée est adapté à un profil de fonction d'amplification (2.1, 2.2) du milieu amplificateur (2) s'étendant transversalement à la direction de rayonnement (E).

3. Procédé selon la revendication 1 ou 2, dans lequel le profil d'intensité (4.1, 4.2) du laser d'ensemencement est en forme de cloche, en particulier gaussien.

4. Procédé selon l'une quelconque des revendications précédentes, dans lequel le rayonnement laser d'ensemencement (5) transformé comporte un mode d'oscillation, lequel ne correspond pas au mode fondamental du rayonnement laser d'ensemencement (4).

5. Procédé selon l'une quelconque des revendications précédentes, dans lequel l'intensité maximale (I_{E}) du profil d'intensité (5.1, 5.2) d'entrée est inférieure à l'intensité maximale (I_{S}) du profil d'intensité (4.1, 4.2) du laser d'ensemencement.

6. Procédé selon l'une quelconque des revendications précédentes, dans lequel le milieu amplificateur (2) pour amplifier le rayonnement laser d'ensemencement (4) est cuboïde.

7. Procédé selon l'une quelconque des revendications précédentes, dans lequel le rayonnement laser d'ensemencement (4) est émis dans le milieu amplificateur (2) essentiellement parallèlement à une normale de surface d'une surface latérale du milieu amplificateur (2), en particulier parallèlement à un axe optique (O) de l'amplificateur (1).

8. Procédé selon l'une quelconque des revendications précédentes, dans lequel le milieu amplificateur (2) est traversé, en particulier le long du même trajet de rayonnement (2.3), par le rayonnement laser d'ensemencement (5) transformé, plusieurs fois à travers le milieu amplificateur (2).

9. Procédé selon l'une quelconque des revendications précédentes, dans lequel des éléments optiques, en particulier des lentilles, des asphères, des lentilles acylindriques, des éléments diffractifs, des miroirs, des éléments mélangeurs totalement réfléchissants et/ou des diaphragmes, sont utilisés dans l'élément transformateur (3).

10. Procédé selon l'une quelconque des revendications précédentes, dans lequel des éléments optiques (15) disposés en aval du milieu amplificateur (2) dans le trajet de rayonnement sont adaptés au profil d'intensité (5.1, 5.2) d'entrée.

11. Procédé selon l'une quelconque des revendications précédentes, dans lequel le profil d'intensité (6.1, 6.2) de sortie du rayonnement laser d'ensemencement (6) amplifié est retransformé par un élément transformateur inverse (7), en particulier à la manière d'un élément transformateur (3), en particulier en un profil d'intensité (8.1, 8.2) similaire au profil d'intensité (4.1, 4.2) du laser d'ensemencement.

12. Procédé selon l'une quelconque des revendications précédentes, dans lequel le milieu amplificateur (2) est pompé par un rayonnement (9) de laser de pompage dont le profil d'intensité correspond au profil d'intensité (5.1, 5.2) d'entrée.

13. Procédé selon l'une quelconque des revendications précédentes, dans lequel plusieurs milieux amplificateurs (2) sont placés en série le long du trajet de rayonnement à la manière d'étages amplificateurs en cascade.

14. Procédé selon l'une quelconque des revendications précédentes, dans lequel une largeur transversale (b) du milieu amplificateur (2) est choisie en fonction de la puissance.

15. Amplificateur permettant d'amplifier un rayonnement laser d'ensemencement (4), lequel est émis le long d'une direction de rayonnement (E) dans un milieu amplificateur (2) actif au laser, dans lequel le milieu amplificateur actif au laser comporte un axe lent (X) perpendiculaire à la direction de rayonnement et un axe rapide (Y) orthogonal à l'axe lent (X), dans lequel le rayonnement laser d'ensemencement (4) comportant un profil transversal d'intensité (4.1, 4.2) du laser d'ensemencement, dans lequel l'amplificateur comporte un élément transformateur (3) côté rayonnement, lequel est placé devant le milieu amplificateur actif au laser, lequel est conçu de telle sorte que le rayonnement laser d'ensemencement est transformé en un profil d'intensité (5.1, 5.2) d'entrée en forme de plateau le long de l'axe lent (X), dans lequel le profil d'intensité (5.1, 5.2) d'entrée conserve la forme du profil d'intensité (4.1, 4.2) du laser d'ensemencement le long de l'axe rapide (Y).
